# EUROPÄISCHE PATENTANMELDUNG

(11) **EP 4 679 208 A1**
(43) Veröffentlichungstag der Anmeldung: **14.01.2026**
(21) Anmeldenummer: 24187091.4
(22) Anmeldetag: 08.07.2024
(51) Int. Cl.: G05B 19/05, G05B 19/042

(54) **VERFAHREN ZUM BETREIBEN EINER ZYKLUSORIENTIERTEN STEUERUNGS-SOFTWARE**

(71) Anmelder: Siemens Aktiengesellschaft, 80333 München (DE)
(72) Erfinder: Walter, Maximilian, 90408 Nürnberg (DE); Baus, Jürgen, 76344 Eggenstein-Leopoldshafen (DE); Hog, Ronny, 92245 Kümmersbruck (DE); Schweiger, Julia, 92242 Hirschau (DE); Schötz, Sebastian, 92256 Hahnbach (DE); Walter, Markus, 96050 Bamberg (DE); Kretschmer, Felix, 90559 Burgthann (DE)
(74) Vertreter: Siemens Patent Attorneys

(57) **Zusammenfassung**

Die Erfindung betrifft ein Verfahren zum Betreiben einer zyklusorientierten Steuerungs-Software (Soft-PLC) zur fehlersicheren Steuerung von Automatisierungs-Abläufen eines Prozesses, wobei die Steuerungs-Software (Soft-PLC) innerhalb einer IT-Infrastruktur (1) zum Ablauf gebracht wird, wobei zur Überprüfung der Eignung der IT-Infrastruktur (1) für eine Durchführung der fehlersicheren Automatisierungs-Abläufe Hardware-Eigenschaften und/oder Software-Eigenschaften als Sicherheits-Merkmale (M 1, ... , M n) abgefragt und geprüft werden und wenn die Prüfung erfolgreich ist, kann daraus geschlossen werden, dass die Voraussetzungen für einen fehlersicheren Betrieb erfüllt sind, und daraufhin die Steuerungs-Software (Soft-PLC) eine Freigabe (SZB) für einen regulären Betrieb erhält, andernfalls wird ein sicherer Zustand eingenommen.

## Beschreibung

Die Erfindung betrifft ein Verfahren zum Betreiben einer zyklusorientierten Steuerungs-Software zur fehlersicheren Steuerung von Automatisierungs-Abläufen eines Prozesses, wobei die Steuerungs-Software innerhalb einer IT-Infrastruktur zum Ablauf gebracht wird.

Heute gängige Steuerungen basieren auf einer Hardwareplattform, einen speziellen elektronischen Unterbau, nämlich eine Speicherprogrammierbare Steuerung (SPS). Wenn neuerdings von virtuellen Steuerungen oder Softwaresteuerungen die Rede ist, so ist dafür ebenfalls eine Hardware zur Ausführung erforderlich, aber die Hardware kann jetzt komplett abstrahiert sein. Dies bedeutet, dass die ausgeführte Soft-SPS nicht mehr wissen muss, auf welchem Gerät sie läuft.

Diese Geräte können nach wie vor dedizierte Steuerungsgeräte sein, wie multifunktionale Steuerungsplattformen oder Industrie-PCs, oder aber Edge-Computing-Plattformen, diese sind immer häufiger in Steuerungsnetzwerken von Maschinen- und Anlagenbetreibern zu finden, oder es werden sogar Cloud-Computing-Plattformen genutzt. Entscheidend ist die Abstraktion der Hardware durch Container oder Hypervisor. Darauf wird die Soft-SPS mit Standardmitteln »deployed« beziehungsweise per Tool orchestriert - eine Installation wie bei der softwarebasierten Steuerung entfällt.

Mit dem Schlagwort hyperkonvergente Infrastruktur (englisch hyper-converged Infrastructure, HCl) lässt sich eine IT-Infrastruktur bezeichnen, mit der ein weiterer Abstarktionsgrad erreicht wird, der eine Software-zentrierte Architektur zugrunde liegt, in der Prozessoren, Speicher, Netzwerk und Virtualisierung und andere Technologien eng miteinander verzahnt sind.

Hyperkonvergente Infrastrukturen sind eine Weiterentwicklung konvergenter Infrastrukturen, in denen ebenfalls Hard- und Software gebündelt werden. Herkömmliche monolithische Speichersysteme, wie z. B. Storage Area Network (SAN) oder Network Attached Storage (NAS), die im Rechenzentrum eigene Silos bildeten, werden in hyperkonvergenten Infrastrukturen durch softwaredefinierte Speichersysteme abgelöst. Die wesentlichen Komponenten eines Rechenzentrums wandern somit in eine Appliance und werden durch gemeinsame Virtualisierungs- und Management-Tools verwaltet. Die Aufgabe der Storage-Software besteht darin, die direkt mit dem System verbundenen Festplatten (DAS - Direct Attached Storage) beziehungsweise SSD-Medien in Form eines virtuellen Pools für die Anwendungen bereitzustellen.

Eine Hyperkonvergente Infrastruktur vereint Rechenleistung (Prozessoren und RAM) mit Massenspeicher (SSDs und Festplatten) in jeder einzelnen (virtuellen) Maschine, verbindet jedoch den Speicher mehrerer Maschinen mit Storage-Software zu einem einheitlichen System. Dies steigert die Performance und erleichtert die Verwaltung und Automatisierung unter einer einheitlichen Administrationsoberfläche. Ebenfalls kann bessere Ausfallsicherheit erzielt werden. Insgesamt traut man Hyperkonvergenzlösungen inzwischen auch den Betrieb von unternehmenswichtigen Applikationen zu, z. B. Geschäftsprozesse, Produktivanwendungen und BigData/Analytik laufen zu lassen. Auch kann HCl als Plattform für virtuelle Desktops bei Großfirmen, sowie bei Webhosting-Dienstleistern eingesetzt werden.

Die Erfindung liegt auf dem Fachgebiet von sicherheitsgerichteten Steuerungen, insbesondere als Software. Speicherprogrammierbare Steuerungen müssen gemäß den Anforderungen der Norm EN 61508 derart ausgestaltet sein, dass sie eine funktionale Sicherheit erfüllen. Bei sicherheitsbezogenen Systemen, wie speicherprogrammierbare Steuerungen für kritische Prozesse, die elektrische, elektronische oder programmierbare elektronische Komponenten enthalten und deren Ausfall ein maßgebliches Risiko für Mensch oder Umwelt bedeutet, müssen diese für eine besondere Gewährleistung der Sicherheit ausgestaltet sein. Als Beispiele für Anwendungen, welche eine erhöhte Sicherheit erfordern, sind folgende zu nennen: Kernkraftwerke, Leittechnik für Systeme mit sicherheitstechnischer Bedeutung, Bahnanwendungen, Telekommunikationstechnik, Signaltechnik und Datenverarbeitungssysteme, chemische Prozesse, aber auch beispielsweise kleine Anlagen wie eine Stanze zum Ausstanzen von Blechteilen.

Klassische Funktional-sichere, programmierbare Industriesteuerungen (z.B. F-SPS) sind in Schichten organisiert. Auf der untersten HW-Schicht laufen ein Betriebssystem, eine Firmware, und Gerätetreiber ab, und darauf laufen die Anwendungen ab.

Eine sichere Ausführung der Sicherheitsfunktionen erfordert, dass die darunter liegenden Schichten über bestimmte Merkmale verfügen (sogenannte F-Merkmale). Dazu gehört z.B. ein Mindestmaß an Hardwarezuverlässigkeit (z.B. Mean Time To Failure mindestens 2 Jahre), und häufig eine Aussage über die Unabhängigkeit von Komponenten. Basiert das Sicherheitskonzept z.B. auf der redundanten Ausführung der Sicherheitsfunktion, wird häufig gefordert, dass das Programm auf unterschiedlichen CPU-Kernen ausgeführt werden muss, um permanente Hardwarefehler erkennen zu können. Daneben kann auch gefordert werden, dass andere Hardware-Komponenten wie z.B. (Cache-) Speicher, Taktgeneratoren, Haupt- und Hintergrundspeicher getrennt sein müssen.

Die Überprüfung dieser F-Merkmale erfolgt üblicherweise in der Entwurfsphase, z.B. bei der Entwicklung einer neuen F-CPU. Dies erfordert, dass die Hardware-Architektur in der Entwurfsphase bereits bekannt ist.

Im Zusammenhang mit sogenannten Software-Controllern, die lediglich aus Software bestehen, und erst bei der Inbetriebnahme einer bestimmten Hardware zugewiesen werden, sind nicht alle Hardware-Eigenschaften zur Entwurfszeit bekannt. Verschärft wird das Problem durch Hyperkonvergente Infrastrukturen. Bei diesen handelt es sich um Cluster von Rechenressourcen, auf dem eine große Zahl von Software-Controllern gleichzeitig läuft, wobei sich die Zuweisung von Controller zu Rechenressource sogar im laufenden Betrieb ändern kann.

Eine Überprüfung der F-Merkmale muss in diesen Fällen vorab und generell erfolgen, was in der Praxis mit großen Schwierigkeiten verbunden sein kann, und evtl. sogar verhindert, dass Sicherheitsfunktionen überhaupt auf einer HCl ausgeführt werden können. Ein weiteres Problem besteht darin, dass bei jeder Änderung an der HCl eine Überprüfung aller F-Merkmale erfolgen muss.

Es ist eine Aufgabe der Erfindung ein Verfahren bereit zu stellen, mit welchem eine zyklusorientierte Steuerungs-Software zur fehlersicheren Steuerung von Automatisierungs-Abläufen innerhalb einer IT-Infrastruktur nach den Bedingungen für fehlersichere Steuerungen betrieben werden kann.

Die Aufgabe wird dadurch gelöst, dass zur Überprüfung der Eignung der IT-Infrastruktur für eine Durchführung der fehlersicheren Automatisierungs-Abläufe Hardware-Eigenschaften und/oder Software-Eigenschaften als Sicherheits-Merkmale abgefragt und geprüft werden und wenn die Prüfung erfolgreich ist, kann daraus geschlossen werden, dass die Voraussetzungen für einen fehlersicheren Betrieb erfüllt sind, und daraufhin die Steuerungs-Software eine Freigabe für einen regulären Betrieb erhält, andernfalls wird ein sicherer Zustand eingenommen.

Erfindungsgemäß wird vorgeschlagen, dass die F-Merkmale, welche die IT-Infrastruktur aufweisen muss, mittels Software automatisch während der Inbetriebnahme oder bei jedem Neustart des Software-Controllers bzw. der Steuerungs-Software geprüft werden. Z.B. könnte eine solche Prüfung bei Software F-CPUs in einem Weck-OB oder in der Firmware erfolgen.

Die Prüfung erfolgt sodann vollautomatisch in einer Software. Ist die Prüfung erfolgreich, kann daraus geschlossen werden, dass alle F-Merkmale erfüllt sind, und der reguläre Betrieb beginnt. Andernfalls gelten nicht alle F-Merkmale als erfüllt, und das System nimmt einen sicheren Zustand ein. Der sichere Zustand kann z.B. darin bestehen, alle Antriebe des Systems zu stoppen bzw. überhaupt nicht erst zu starten, und eine Diagnosemeldung (Display, Warnleuchte etc.) auszugeben.

Eine Weiterentwicklung des Verfahrens sieht vor, das zyklisch im regulären Betrieb abgefragt wird, ob eine erneute Überprüfung auf Grund von Änderungen in der Infrastruktur erforderlich ist und für den Fall, dass sich eine Änderung ergeben hat, wird der regulären Betrieb zunächst aufrechterhalten und parallel dazu werden die Hardware-Eigenschaften und/oder Software-Eigenschaften als Sicherheits-Merkmale abgefragt.

Die Tests der F-Merkmale könnten in regelmäßigen Abständen (z.B. alle 10 Minuten) während des Betriebs ausgeführt werden. Dies ist dann nötig, wenn der Software-Controller bzw. die Steuerungs-Software im laufenden Betrieb zwischen verschiedenen Systemen verschoben werden soll (z.B. Migration auf Grund von Load-Balancing). Dann genügt es nicht, die F-Merkmale einmal zu Beginn zu prüfen. Alternativ können die F-Merkmale auch event-basiert geprüft werden, sobald eine Migration stattgefunden hat.

Als Alternative zum zyklischen Prüfen kann im regulären Betrieb auch Ereignisgesteuert eine erneute Überprüfung auf Grund eines Änderungsereignis angestoßen werden, der reguläre Betrieb wird zunächst aufrechterhalten und parallel dazu werden die Hardware-Eigenschaften und/oder Software-Eigenschaften als Sicherheits-Merkmale abgefragt.

Mit Vorteil wird das Vorhandensein unabhängiger und diversitär ausgelegter Daten-Speicher, als eine Hardware-Eigenschaft für ein erstes Sicherheitsmerkmal, abgefragt wird, dazu wird in einem ersten Daten-Speicher ein Speicherbereich reserviert und in einem zweiten Daten-Speicher wird auch ein Speicherbereich reserviert, nun werden eine Anzahl von Speicherzugriffen abwechselnd auf die reservierten Speicherbereiche durchgeführt, sind die zeitlichen Zugriffswerte auf beide Speicherbereiche nahezu identisch, wird darauf geschlossen, das der erste Speicher und zweite Speicher nicht unabhängig und diversitär ausgestaltet sind, daraus folgt, das die Prüfung nicht erfolgreich war.

Da unterschiedliche (diversitäre) Speicher unterschiedliche Laufzeitverhalten haben, kann dies durch einen Mikrobenchmark (z.B. jeweils N Zugriffe auf zufällige Adressen des Speichers) überprüft werden. Bei großem N sind die Performancewerte bei identischen Speichern ungefähr gleich, bei unterschiedlichen Speichern (z.B. DRAM bzw. solid state drive) stark unterschiedlich.

Mit einer Methode kann das Vorhandensein unabhängiger und diversitär ausgelegter Daten-Speicher wie folgt bewiesen werden, ein erster Zeitstempel wird erfasst und sodann werden gemäß der Anzahl wiederholt eine Leseoperation auf den ersten Speicher und eine Schreiboperation auf den ersten Speicher durchgeführt, nach Beendigung des wiederholten Schreibens und Lesens wird ein zweiter Zeitstempel erfasst, daraufhin werden gemäß der Anzahl wiederholt eine Leseoperation auf den zweiten Speicher und eine Schreiboperation auf den zweiten Speicher durchgeführt, nach Beendigung des wiederholten Schreibens und Lesens wird ein dritter Zeitstempel erfasst, es wird eine erste Gesamtzugriffszeit aus der Differenz aus dem zweiten Zeitstempel und dem ersten Zeitstempel und eine zweite Gesamtzugriffszeit aus der Differenz aus dem dritten Zeitstempel und dem zweiten Zeitstempel berechnet, anschließend wird geprüft, ob eine weitere Differenz aus der ersten Gesamtzugriffszeit und der zweiten Gesamtzugriffszeit eine vorgebbare Abweichung übersteigt, ist das Fall ist das erste Sicherheitsmerkmal erfüllt.

Mit einem weiteren Verfahrensschritt kann man das Vorhandensein unabhängiger, aber trotzdem baugleicher Speicher, als eine Hardware-Eigenschaft für ein zweites Sicherheitsmerkmal wie folgt beweisen, dazu wird in einem ersten Daten-Speicher ein Speicherbereich reserviert und in einem zweiten Daten-Speicher wird auch ein Speicherbereich reserviert, nun werden in einer ersten Testphase über eine Wiederholungsrate eine Anzahl von Speicherzugriffen auf die reservierten Speicherbereiche des ersten Speichers durchgeführt,
dann werden in einer zweiten Testphase wiederum über eine Wiederholungsrate wiederum eine Anzahl von Speicherzugriffen auf die reservierten Speicherbereiche des ersten Speichers durchgeführt, aber nun werden zusätzlich mit einer Zusatzanzahl zusätzliche Speicherzugriffe auf die reservierten Speicherbereiche des zweiten Speichers durchgeführt, sind die zeitlichen Zugriffswerte der Speicherzugriffe auf die reservierten Speicherbereiche des ersten Daten-Speichers in der ersten Testphase und in der zweiten Testphase annähernd gleich, wird darauf geschlossen, das der erste Daten-Speicher und der zweite Daten-Speicher unabhängig voneinander sind, weil andererseits ein gemeinsamer Cache der Daten-Speicher das zeitverhalten beeinflusst hätte.

Das Vorhandensein einer ersten Uhr und einer zweiten Uhr, welche auf einem ersten Taktgenerator bzw. einem zweiten Taktgenerator basieren, wobei die Taktgeneratoren als eine Hardware-Eigenschaft und damit für ein drittes Sicherheitsmerkmal voneinander unabhängig arbeiten müssen, kann wie folgt geprüft werden, es wird jeweils ein erster Uhrzeitstempel der ersten Uhr und der zweiten Uhr erfasst, danach wird eines der folgenden Prüfverfahren durchgeführt: in
einen ersten Prüfverfahren, wird eine Wartezeit gestartet, in einen zweiten Prüfverfahren, wird gezielt das Gangverhalten der ersten Uhr verändert und in einen dritten Prüfverfahren, wird die IT-Infrastruktur neugestartet,
danach wird jeweils ein zweiter Uhrzeitstempel der ersten Uhr und der zweiten Uhr erfasst, aus den zweiten Uhrzeitstempeln und den ersten Uhrzeitstempeln wird eine erste Uhrzeitdifferenz und eine zweite Uhrzeitdifferenz gebildet, anschließend wird geprüft, ob eine Differenz aus der ersten Uhrzeitdifferenz und der zweiten Uhrzeitdifferenz eine vorgebbare Abweichung übersteigt, ist das Fall ist das dritte Sicherheitsmerkmal erfüllt.

Die Unabhängigkeit von Taktgeneratoren kann dadurch nachgewiesen werden, dass die dadurch realisierten Uhren für eine gewisse Zeit ausgeführt werden. Sind beide Uhren intern mit Hilfe desselben Taktgenerators realisiert, zeigen sie immer dieselbe Uhrzeit an. Sind beide Uhren durch unterschiedliche Generatoren realisiert, ergibt sich nach einer gewissen Zeit eine kleine Abweichung.

Eine weitere Möglichkeit, die weniger Zeit erfordert, besteht darin, eine der beiden Uhren gezielt zu verfälschen, z.B. durch gezielte Änderung des Uhrengangs eines der Taktgeneratoren. Diese Änderung darf sich nur auf eine der beiden Uhren auswirken. Ist dies der Fall, kann von unabhängigen Taktgeneratoren ausgegangen werden, und die Änderung am Uhrengang kann rückgängig gemacht werden. Andernfalls wurde erkannt, dass die Taktgeneratoren nicht unabhängig voneinander sind.

In vielen Fällen ist einer der Taktgeneratoren von der Netzspannung abhängig, während der andere auch ohne Netzspannung mit Hilfe einer Batterie weiterläuft. In diesem Fall kann die Unabhängigkeit der Uhr durch einen Neustart des Systems geprüft werden: zeigen beide Uhren danach eine unterschiedliche Uhrzeit an, ist eine Uhr während dem Neustart weitergelaufen, die andere jedoch nicht. Die Uhren verfügen also über unabhängige Taktgeneratoren.

Basiert das Sicherheitskonzept z.B. auf der redundanten Ausführung der Sicherheitsfunktion, wird häufig gefordert, dass das Programm auf unterschiedlichen CPU-Kernen ausgeführt werden muss, um permanente Hardwarefehler erkennen zu können. Daneben kann auch gefordert werden, dass andere Hardware-Komponenten wie z.B. (Cache-)Speicher, Taktgeneratoren, Haupt- und Hintergrundspeicher getrennt sein müssen.

Werden in der IT-Infrastruktur für die Steuerungs-Software eine erste Ablaufumgebung und eine zweite Ablaufumgebung zur Verfügung gestellt, wird als ein viertes Sicherheitsmerkmal geprüft, ob die Ablaufumgebungen voneinander unabhängig realisiert sind, dazu wird ein erster Prozess in der ersten Ablaufumgebung und ein zweiter Prozess in der zweiten Ablaufumgebung gestartet, wobei in der zweiten Ablaufumgebung zusätzliche Rechnungen zum Belasten der zweiten Ablaufumgebung ausgeführt werden, es wird dann geprüft, ob die Prozesse unterschiedlich lange Ausführungsdauern haben.

Die Zeichnung zeigt ein Ausführungsbeispiel der Erfindung. Dabei zeigt:
- FIG 1: ein Ablaufdiagramm für die Abfrage von Sicherheits-Merkmalen,
- FIG 2: ein Ablaufdiagramm für die Abfrage, ob eine Änderung in der Infrastruktur vorgenommen wurde,
- FIG 3: ein Ablaufdiagramm für die Abfrage, ob zwei Speicher nicht baugleich und diversitär sind,
- FIG 4: ein Ablaufdiagramm für die Abfrage, ob zwei Speicher zwar baugleich, aber trotzdem unabhängig voneinander sind,
- FIG 5: ein Ablaufdiagramm für die Abfrage, ob zwei voneinander unabhängige Uhren vorliegen,
- FIG 6: ein Ablaufdiagramm für die Abfrage, ob zwei voneinander unabhängige Ablaufumgebungen in der IT-Infrastruktur vorliegen und
- FIG 7: ein Übersichtbild einer IT-Infrastruktur.

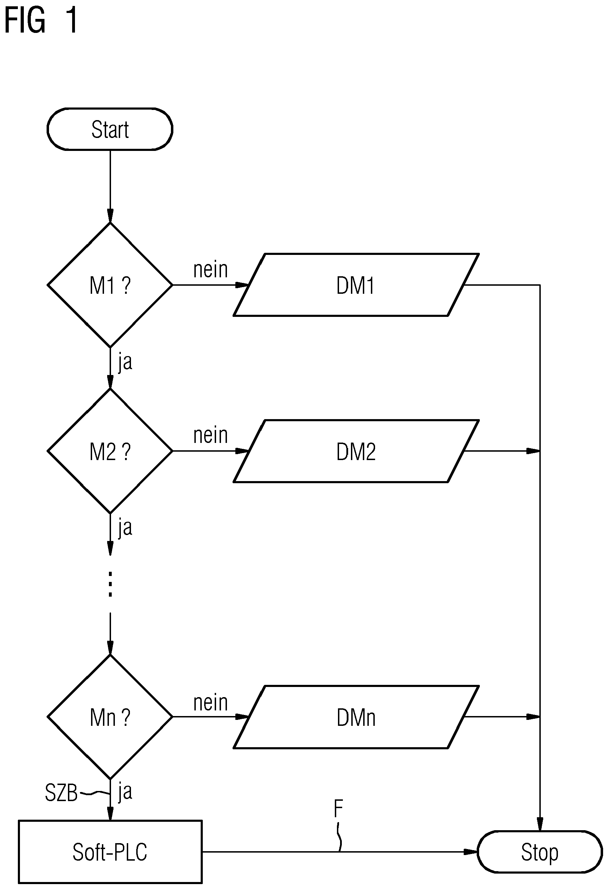

Mit den Figuren 1 bis 6 werden Ablaufdiagramme vorgestellt, mit welchen gezeigt wird, wie man F-Merkmale in Software automatisch während einer Inbetriebnahme oder bei jedem Neustart eines Software-Controllers Soft-PLC prüfen kann. Dies ist besonders wichtig, wenn die Steuerungs-Software Soft-PLC auf einer IT-Infrastrukur 1, insbesondere auf einer hyperkonvergenten Infrastruktur HCl abläuft.

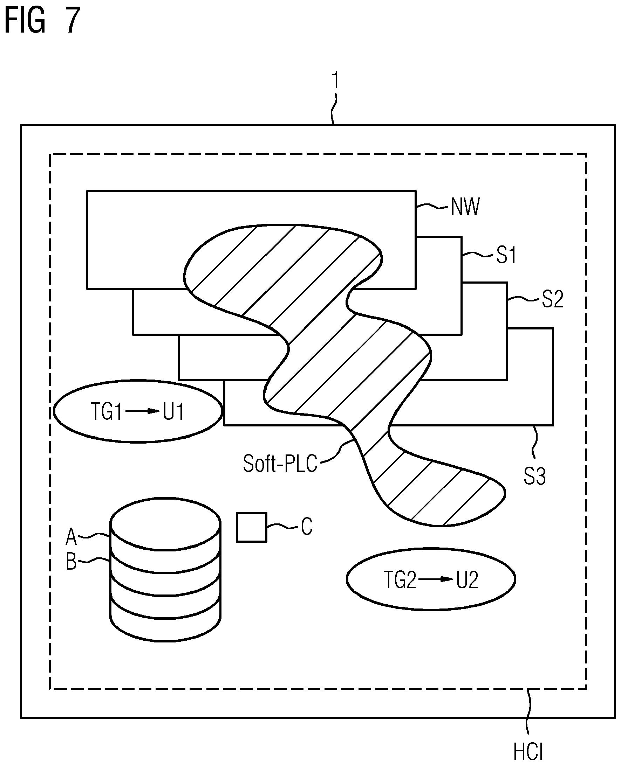

Mit der FIG 7 ist eine IT-Infrastruktur 1, insbesondere die hyperkonvergente Infrastruktur HCl dargestellt. Bei einer hyperkonvergenten Infrastruktur HCl ist es so, dass ein Server, Computer und virtuelle Maschinen Storage und Netzwerklösungen integriert und zentral steuerbar sind. Im Zusammenhang mit sogenannten Software-Controllern, also der Steuerungs-Software Soft-PLC, ist es für einen fehlersicheren Ablauf wichtig, F-Merkmale abzufragen. Diese F-Merkmale werden als Sicherheits-Merkmale M1,...,Mn abgefragt. So kann sichergestellt werden, dass Sicherheitsfunktionen, F-Merkmale und/oder die Sicherheits-Merkmale M1,...,Mn auch auf einer hyperkonvergenten Infrastruktur HCl ausgeführt werden können bzw. vorhanden sind.

Das Ablaufdiagramm gemäß FIG 1 wird bei einem Verfahren zum Betreiben einer zyklusorientierten Steuerungs-Software Soft-PLC eingesetzt um der Steuerungs-Software Soft-PLC, welche innerhalb der IT-Infrastruktur 1 zum Ablauf gebracht wird, den Nachweis für eine fehlersichere Steuerung zu gewährleisten.

Zur Überprüfung der Eignung der IT-Infrastruktur 1 für eine Durchführung der fehlersicheren Automatisierungs-Abläufe werden Hardware-Eigenschaften und/oder Software-Eigenschaften als die Sicherheits-Merkmale M1,...,Mn abgefragt. Nach einem Start des Verfahrens wird ein erstes Sicherheits-Merkmal M1 abgefragt. Ist das Sicherheits-Merkmal nicht erfüllt, wird eine erste Diagnose-Meldung DM1 abgesetzt und das System stoppt und geht in einen sicheren Zustand. Ist das erste Sicherheits-Merkmal M1 erfüllt, wird ein zweites Sicherheits-Merkmal M2 abgefragt. Falls das zweite Sicherheits-Merkmal M2 nicht erfüllt ist, wird eine zweite Diagnosemeldung DM2 abgesetzt und das System geht in einen sicheren Zustand. Die Abfrage der Sicherheits-Merkmale M1,...,Mn setzt sich wie eine Kette fort bis zu einem letzten n-ten Sicherheits-Merkmal Mn. Ist auch das letzte n-te Sicherheits-Merkmal Mn erfüllt, wird eine Freigabe SZB (sicherer zyklischer Betrieb) erteilt und der sichere, zyklische Betrieb der Steuerungs-Software Soft-PLC kann starten. Sollte während des sicheren zyklischen Betriebs der Steuerungs-Software Soft-PLC ein Fehler F auftreten, so wird dieser Fehler F signalisiert und das System geht in einen sicheren Stopp-Zustand.

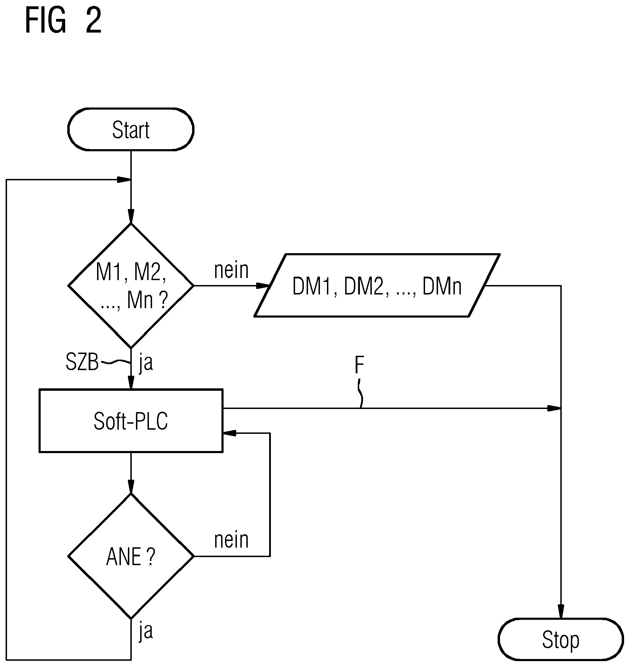

Mit der FIG 2 wird eine zusätzliche Abfrage in dem Verfahren vorgestellt. Nach dem Start werden die bereits abgefragten Sicherheits-Merkmale M1,M2,...,Mn nochmals abgefragt. Sind alle Sicherheits-Merkmale M1,...,Mn erfüllt, wird die Freigabe SZB erteilt. Sollte bei der Abfrage ein Sicherheits-Merkmal nicht erfüllt sein, wird die entsprechende Diagnosemeldung DM1,DM2,...,DMn abgesetzt und das System geht in einen Stopp-Zustand bzw. in einen sicheren Zustand. Mit der Freigabe SZB arbeitet die Steuerungs-Software Soft-PLC auf der IT-Infrastruktur 1 nun in einem sicheren zyklischen Betrieb.

Von Vorteil ist es nun, wenn zyklisch im regulären Betrieb abgefragt wird, ob eine erneute Überprüfung aufgrund von Änderungen in der IT-Infrastruktur 1 erforderlich ist und für den Fall, dass sich eine Änderung ergeben hat, wird der reguläre Betrieb zunächst aufrechterhalten und parallel dazu werden die Hardware-Eigenschaften und/oder Software-Eigenschaften als Sicherheits-Merkmale M1,...,Mn erneut abgefragt. Dies ist immer dann nötig, wenn der Software-Controller bzw. die Steuerungs-Software Soft-PLC im laufenden Betrieb der IT-Infrastruktur 1 zwischen verschiedenen Systemen verschoben werden soll (z.B. Migration aufgrund von Load-Balancing). Dann genügt es eben nicht mehr, die F-Merkmale einmal zu Beginn zu prüfen. Es ist ebenfalls möglich, im regulären Betrieb der Steuerungs-Software Soft-PLC eine ereignisgesteuerte erneute Überprüfung aufgrund eines Änderungsereignisses anzustoßen.

Eine weitere vorteilhafte Ausgestaltung ist es, dass bei der Überprüfung das System nicht sofort in einen sicheren Zustand übergeht, wenn es ein Sicherheits-Merkmal M1,...,Mn gefunden hat, welches nicht erfüllt ist, sondern dass das System im Rahmen der Diagnose die Ursache der Verletzung bekannt gibt, und eventuell Hilfestellung gibt, wie diese Ursache beseitigt werden kann. Dann wäre beispielsweise in der ersten Diagnosemeldung DM1 folgende Hilfestellung zu lesen "Es ist festgestellt worden, dass ein erster Daten-Speicher B und ein zweiter Daten-Speicher A nicht voneinander unabhängig und diversitär ausgestaltet ist".

Nach dem Start des sicheren zyklischen Betriebs durch die Freigabe SZB wird dann über eine Abfrage zur Neubewertung
ANE, beispielsweise alle zehn Minuten, erneut eine Prüfung über die Sicherheits-Merkmale M1,...,Mn durchgeführt.

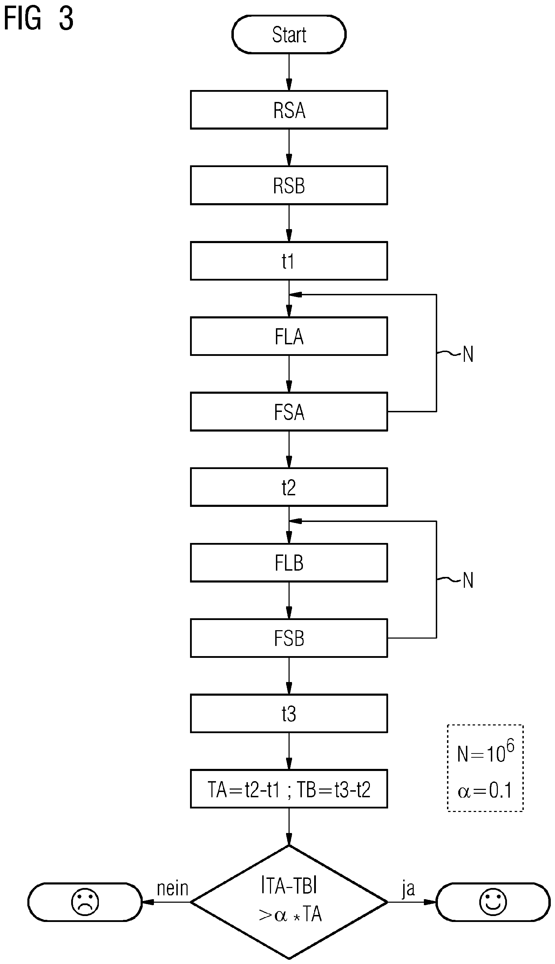

Das Ablaufdiagramm in FIG 3 zeigt eine Abfrage, ob zwei Speicher nicht baugleich und diversitär ausgestaltet sind. Dazu wird nach einem Start ein erster Verfahrensschritt RSA, bei welchem Speicher in einem ersten Daten-Speicher A reserviert wird, durchgeführt. Anschließend wird ein zweiter Verfahrensschritt RSB, bei welchem Speicher in einem zweiten Daten-Speicher B reserviert wird, durchgeführt. Es wird ein erster Zeitstempel t1 erfasst, sodann wird in einem weiteren Verfahrensschritt FLA gemäß einer Anzahl N wiederholt eine Leseoperation auf den ersten Daten-Speicher A und eine Schreiboperation auf den ersten Daten-Speicher A durchgeführt. Die Leseoperation auf den ersten Daten-Speicher A wird in einem Verfahrensschritt FLA durchgeführt und die Schreiboperation auf den ersten Daten-Speicher A wird in einem Verfahrensschritt FSA durchgeführt. Nach N-Wiederholungen wird ein zweiter Zeitstempel t2 erfasst. Nun werden wiederum gemäß der Anzahl N wiederholt eine Leseoperation auf den zweiten Daten-Speicher B und eine Schreiboperation auf den zweiten Daten-Speicher B durchgeführt. Die Leseoperation auf den zweiten Daten-Speicher B wird in einem Verfahrensschritt FLB durchgeführt und die Schreiboperation auf den zweiten Daten-Speicher B wird in einem Verfahrensschritt FSB durchgeführt. Nach Beendigung des wiederholten Schreibens und Lesens wird ein dritter Zeitstempel t3 erfasst.

In einen nächsten Verfahrensschritt wird eine erste Gesamtzugriffszeit TA aus der Differenz aus dem zweiten Zeitstempel t2 und dem ersten Zeitstempel t1 gebildet. Auch wird eine zweite Gesamtzugriffszeit TB aus der Differenz aus dem dritten Zeitstempel t3 und dem zweiten Zeitstempel t2 berechnet. Anschließend wird geprüft, ob eine weitere Differenz aus der ersten Gesamtzugriffszeit TA und der zweiten Gesamtzugriffszeit TB eine vorgebbare Abweichung übersteigt, ist dass der Fall, ist das erste Sicherheits-Merkmal M1 erfüllt. Die vorgebbare Abweichung ist beispielsweise gegeben, durch einen Faktor α, welcher 10⁻⁶ sein könnte, mit dem Produkt der ersten Gesamtzugriffszeit TA multipliziert. Da unterschiedliche (diversitäre) Speicher unterschiedliches Laufzeitverhalten haben, kann dies durch den vorangegangenen Mikrobenchmark auf zufällige Adressen der Daten-Speicher A,B überprüft werden. Bei einer großen Anzahl N sind die Performancewerte bei identischen Speichern ungefähr gleich, bei unterschiedlichen Speichern z.B. D-RAM bzw. Solid-State-Drive, sind die Performancewerte stark unterschiedlich.

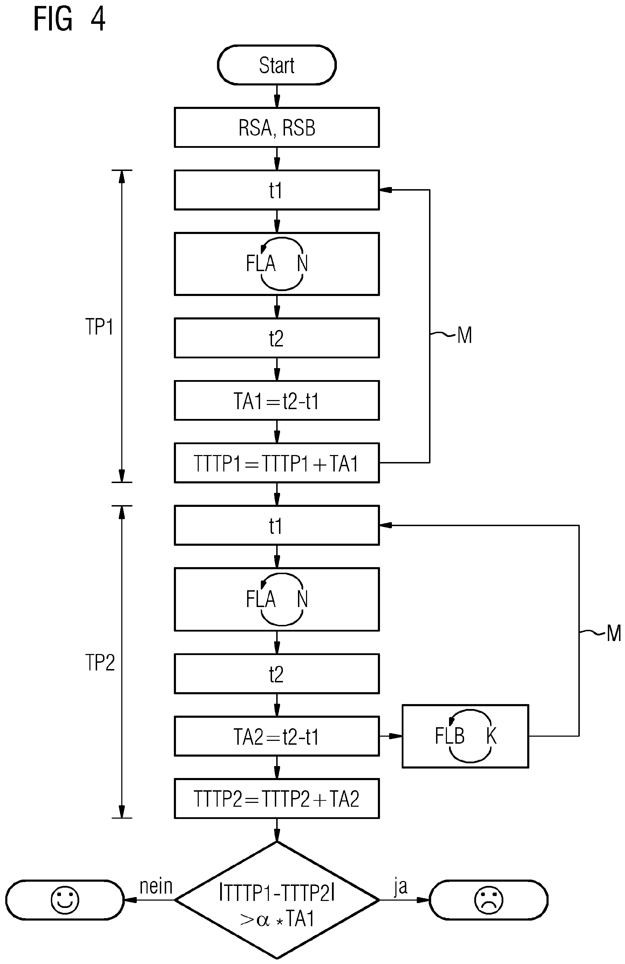

Mit der FIG 4 wird ein Ablaufdiagramm für die Abfrage, ob zwei Speicher zwar baugleich, aber trotzdem unabhängig voneinander sind, vorgestellt. Zunächst einmal wird wiederum in einem ersten Verfahrensschritt RSA und in einem zweiten Verfahrensschritt RSB in dem ersten Daten-Speicher A ein Speicherbereich reserviert und in dem zweiten Daten-Speicher B wird auch ein Speicherbereich reserviert. Nun werden in einer ersten Testphase TP1 über eine Wiederholungsrate M eine Anzahl N von Speicherzugriffen auf die reservierten Speicherbereiche des ersten Daten-Speichers A durchgeführt. Im Kreislauf der Wiederholungsrate M wird immer wieder ein erster Zeitstempel t1 aufgezeichnet und es wird N-Mal der Verfahrensschritt FLA durchgeführt, dann wird ein zweiter Zeitstempel t2 erfasst. In der ersten Testphase TP1 wird immer wieder die Differenz des zweiten Zeitstempels t2 und des ersten Zeitstempels t1 als eine erste Unterscheidungszeit TA1 gebildet. Weiterhin wird eine erste Gesamtzugriffszeit TTTP1 in der ersten Testphase TP1 gebildet (T - Total in der ersten Testphase TP1).

In einer zweiten Testphase TP2 wird dann wiederum ein erster Zeitstempel t1 ermittelt und es wird über die Wiederholungsrate M wiederum eine Anzahl N von Speicherzugriffen auf die reservierten Speicherbereiche des ersten Daten-Speichers A durchgeführt, aber nun werden zusätzlich mit einer Zusatzanzahl K zusätzliche Speicherzugriffe auf die reservierten Speicherbereiche des zweiten Daten-Speichers B durchgeführt. Nach der Erfassung des ersten Zeitstempels t1 werden in dem Verfahrensschritt FLA wieder N-Leseoperationen auf den ersten Daten-Speicher A ausgeführt, dann wird der zweite Zeitstempel t2 erfasst, es wird wiederum die zweite Zeitdifferenz TA2 aus dem zweiten Zeitstempel t2 und dem ersten Zeitstempel t1 gebildet und es wird eine weitere zweite Gesamtzugriffszeit TTP2 durch Aufaddieren der jeweiligen zweiten Zeitdifferenz zu der zweiten Gesamtzugriffszeit TTTP2 (T-Total in zweiter Testphase TP2). Sind die N-Wiederholungen abgearbeitet worden, wird geprüft, ob die Zugriffswerte der Speicherzugriffe auf die ersten reservierten Speicherbereiche des ersten Daten-Speichers A in der ersten Testphase TP1 und in der zweiten Testphase TP2 annähernd gleich sind. Ist das der Fall, wird darauf geschlossen, dass der erste Daten-Speicher A und der zweite Daten-Speicher B unabhängig voneinander sind, weil andererseits ein gemeinsamer Cache C der Daten-Speicher A,B das Zeitverhalten beeinflusst hätte. Ist das Ergebnis bei dem Vergleichsfall der zeitlichen Zugriffswerte ja, so ist das zweite Sicherheitsmerkmal M2 nicht erfüllt, da die Speicher nicht unabhängig voneinander sind. Ist das Ergebnis nein, so ist das ein Zeichen dafür, dass die Speicher unabhängig voneinander sind, d.h. es liegen zwei physikalisch getrennte Speicher vor.

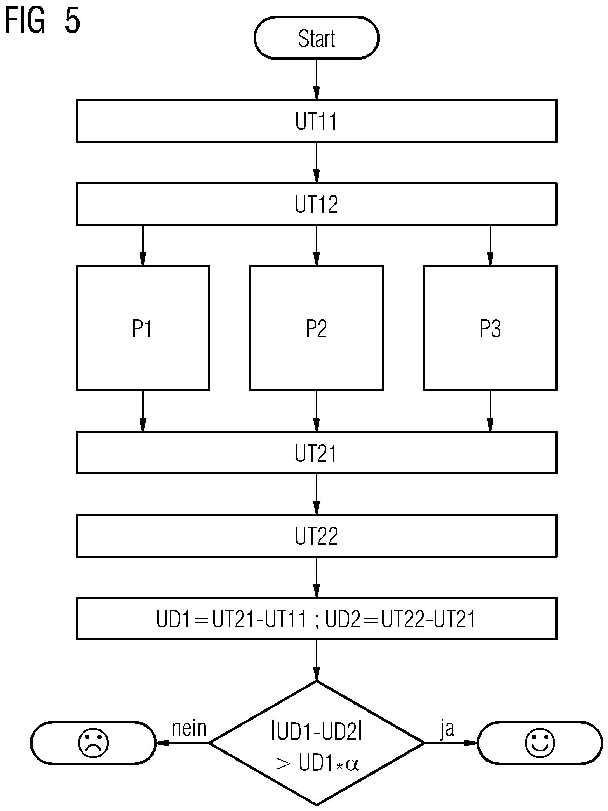

Gemäß FIG 5 wird ein Ablaufdiagramm vorgesellt, um ein drittes Sicherheitsmerkmal M3 zu prüfen. Hierzu wird nach einem Start das Vorhandensein einer ersten Ihr U1 und einer zweiten Uhr U2, welche auf einem ersten Taktgenerator TG1 bzw. einen zweiten Taktgenerator TG2 basieren, abgefragt. Die Taktgeneratoren TG1,TG2 sollen als eine Hardware-Eigenschaft und damit für das dritte Sicherheits-Merkmal M3 voneinander unabhängig arbeiten müssen.

Nach dem Start wird jeweils ein erster Uhrzeitstempel UT11,UT12 der ersten Uhr U1 und der zweiten Uhr U2 erfasst. In dem Ablaufdiagramm gemäß FIG 5 können drei alternative Prüfverfahren P1,P2,P3 durchlaufen werden. In einem ersten Prüfverfahren P1, wird eine Wartezeit WZ gestartet, in einem zweiten Prüfverfahren P2, wird gezielt das Gangverhalten der ersten Uhr U1 verändert und in einem dritten Prüfverfahren P3, wird die IT-Infrastruktur 1 neu gestartet.

Die im ersten Prüfverfahren P1 gestartete Wartezeit WZ könnte beispielsweise eine Stunde sein. Im zweiten Prüfverfahren P2 wird die Ganggenauigkeit durch eine veränderte Frequenz des Taktgenerators vorgegeben zusätzlich kann 1 Minute gewartet werden. Das dritte Prüfverfahren P3 ist durch den Reboot des Systems selbsterklärend. Gemeinsam ist allen drei Prüfverfahren P1,P2,P3 das danach ein zweiter Zeitstempel UT21 der ersten Uhr U1 erfasst wird. Nahezu zeitgleich wird ein zweiter Zeitstempel UT22 der zweiten Uhr U2 erfasst. In einem folgenden Verfahrensschritt wird eine erste Uhrzeitdifferenz UT1 und eine zweite Uhrzeitdifferenz UT2 gebildet. Die Uhrzeitdifferenzen UT1,UT2 ergeben sich jeweils aus dem zweiten Zeitstempel minus dem ersten Zeitstempel UT21 der ersten Uhr U1 bzw. aus dem zweiten Zeitstempel UT22 minus dem ersten Zeitstempel UT21 der zweiten Uhr U2. Anschließend wird geprüft, ob eine Differenz aus der ersten Uhrzeitdifferenz UT1 und der zweiten Uhrzeitdifferenz UT2 eine vorgebbare Abweichung übersteigt, ist das der Fall, ist das dritte Sicherheits-Merkmal M3 erfüllt.

Das Ablaufdiagramm gemäß FIG 5 verfolgt das Prinzip, dass die Unabhängigkeit von Taktgeneratoren TG1,TG2 dadurch nachgewiesen werden kann, dass die dadurch realisierten Uhren U1,U2 für eine gewisse Zeit ausgeführt werden. Sind beide Uhren U1,U2 intern mit denselben Taktgeneratoren realisiert oder demselben Taktgenerator realisiert, zeigen sie immer dieselbe Uhrzeit an. Sind beide Uhren U1,U2 durch unterschiedliche Taktgeneratoren TG1,TG2 realisiert, ergibt sich nach einer gewissen Zeit eine kleine Abweichung.

Insbesondere im zweiten Prüfverfahren P2 besteht der Test darin, dass eine der beiden Uhren U1,U2 gezielt verfälscht wird, z.B. durch gezielte Änderungen des Uhrengangs eines der Taktgeneratoren TG1,TG2. Diese Änderung darf sich nur auf eine der beiden Uhren U1,U2 auswirken. Ist dies der Fall, kann von unabhängigen Taktgeneratoren TG1,TG2 ausgegangen werden, und die Änderung am Uhrengang kann rückgängig gemacht werden.

Andernfalls wurde erkannt, dass die Taktgeneratoren TG1,TG2 nicht unabhängig voneinander sind.

In vielen Fällen ist einer der Taktgeneratoren von einer Netzspannung abhängig, während der andere Taktgenerator auch ohne Netzspannung und mit Hilfe einer Batterie weiterläuft. In diesem Fall kann die Unabhängigkeit der Uhr durch einen Neustart des Systems geprüft werden. Zeigen beide Uhren danach eine unterschiedliche Uhrzeit an, ist eine Uhr während dem Neustart weitergelaufen, die andere Uhr jedoch nicht. Die Uhren verfügen also über unabhängige Taktgeneratoren.

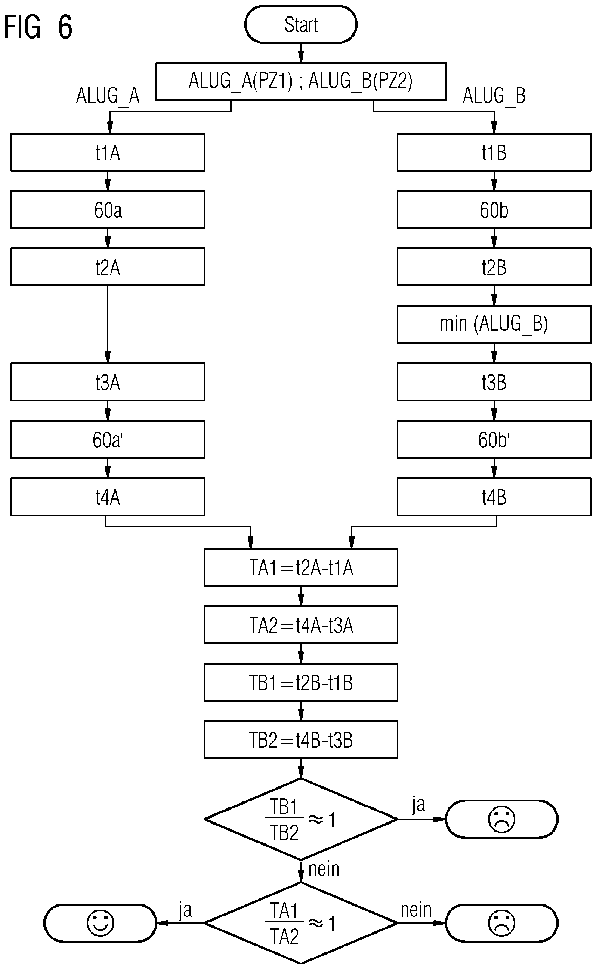

Gemäß FIG 6 wird ein Ablaufdiagramm vorgestellt, um zu prüfen, ob zwei Prozesse PZ1,PZ2 auf unterschiedlichen Rechnern bzw. auf unterschiedlichen Ablaufebenen ALUG_A, ALUG_B ablaufen. Dazu wird in der IT-Infrastruktur 1 für die Steuerungs-Software Soft-PLC eine erste Ablaufumgebung ALUG_A und eine zweite Ablaufumgebung ALUG_B zur Verfügung gestellt. Der erste Prozess PZ1 wird in der ersten Ablaufumgebung ALUG_A gestartet und der zweite Prozess PZ2 wird in der zweiten Ablaufumgebung ALUG_B gestartet. In der ersten Ablaufumgebung ALUG_A wird ein erster Zeitstempel t1A erfasst. Daraufhin wird in einem Verfahrensschritt 60a der Rechner durch Ausführungen von Rechnungen mit konstantem Aufwand belastet, danach wird ein zweiter Zeitstempel t2a erfasst. Parallel dazu wird in der zweiten Ablaufumgebung ALUG_B ein erster Zeitstempel t1b erfasst und es werden in einem Verfahrensschritt 60b wiederum Rechnungen mit konstantem Aufwand ausgeführt. Danach wird ein zweiter Zeitstempel t2b erfasst, aber nun wird in der zweiten Ablaufumgebung ALUG_B die Rechenleistung gedrosselt. In der ersten Ablaufumgebung ALUG_A wird ein dritter Zeitstempel t3a erfasst und in einem Verfahrensschritt 60a' werden wiederum Rechnungen mit konstantem Aufwand ausgeführt. Danach wird ein vierter Zeitstempel t4a erfasst. Auch parallel dazu in der zweiten Ablaufumgebung ALUG_B wird nach der Drosselung der Rechengeschwindigkeit der zweiten Ablaufumgebung ALUG_B ein dritter Zeitstempel t3b erfasst, daraufhin werden in einem Verfahrensschritt 60b wieder Rechnungen mit konstantem Aufwand ausgeführt. Danach wird ein vierter Zeitstempel t4b erfasst. Die erfassten Zeitstempel der ersten Ablaufumgebung ALUG_A und ALUG_B werden nun folgendermaßen ausgewertet. Für die erste Ablaufumgebung ALUG_A wird eine erste Differenzzeit TA1 und eine zweite Differenzzeit TA2 aus den erfassten Zeitstempeln gebildet und für die zweite Ablaufumgebung ALUG_B wird eine erste Differenzzeit TB1 und eine zweite Differenzzeit DB2 aus den erfassten Zeitstempeln gebildet nun wird geprüft, ob das Verhältnis der ersten Differenzzeit TB1 zur zweiten Differenzzeit TB2 der zweiten Ablaufumgebung ALUG_B ungefähr 1 ist, ist das der Fall, ist der Test fehlgeschlagen, das bedeutet das Drosseln hat keine Auswirkung gezeigt. Ist das Verhältnis der ersten Differenzzeit TB1 zur zweiten Differenzzeit TB2 nicht ungefähr 1 kommt es zu einer weiteren Abfrage. Hier wird geprüft, ob das Verhältnis der ersten Differenzzeit TA1 zur zweiten Differenzzeit TA2 der ersten Ablaufumgebung ALUG_A ungefähr 1 ist, ist dies der Fall, ist der Test erfolgreich gewesen. D.h. die Rechner A und B bzw. die erste Ablaufumgebung ALUG_A und die zweite Ablaufumgebung ALUG_B sind voneinander unabhängig.

Bereits weiter oben erläutert wird noch einmal auf die FIG 7 eingegangen, es ist eine IT-Infrastruktur 1 abgebildet, welche als eine hyperkonvergente Infrastruktur HCl ausgestaltet ist. Es ist ein erster Server S1 ein zweiter Server S2 und ein dritter Server S3 vorhanden. Ein erster Datenspeicher A und ein zweiter Datenspeicher B sind ebenfalls vorhanden. Weiterhin ist ein Cache C vorhanden. Ein erster unabhängiger Taktgenerator TG1 sorgt für das Vorhandensein einer ersten Uhr U1. Ein zweiter Taktgenerator TG2 sorgt für das Vorhandensein einer zweiten Uhr U2. Es ist ein Netzwerk NW vorhanden. Die zyklusorientierte Steuerungs-Software Soft-PLC zur fehlersicheren Steuerung von Automatisierungs-Abläufen befindet sich nun verteilt in der hyperkontingenten Infrastruktur HCl als eine ausführbare Software.

## Patentansprüche

1. Verfahren zum Betreiben einer zyklusorientierten Steuerungs-Software (Soft-PLC) zur fehlersicheren Steuerung von Automatisierungs-Abläufen eines Prozesses, wobei die Steuerungs-Software (Soft-PLC) innerhalb einer IT-Infrastruktur (1) zum Ablauf gebracht wird,
**dadurch gekennzeichnet, dass**
zur Überprüfung der Eignung der IT-Infrastruktur (1) für eine Durchführung der fehlersicheren Automatisierungs-Abläufe Hardware-Eigenschaften und/oder Software-Eigenschaften als Sicherheits-Merkmale (M1,...,Mn) abgefragt und geprüft werden und wenn die Prüfung erfolgreich ist, kann daraus geschlossen werden, dass die Voraussetzungen für einen fehlersicheren Betrieb erfüllt sind, und daraufhin die Steuerungs-Software (Soft-PLC) eine Freigabe (SZB) für einen regulären Betrieb erhält, andernfalls wird ein sicherer Zustand eingenommen.

2. Verfahren nach Anspruch 1, wobei zyklisch im regulären Betrieb abgefragt wird, ob eine erneute Überprüfung aufgrund von Änderungen in der Infrastruktur erforderlich ist und für den Fall, dass sich eine Änderung ergeben hat, wird der reguläre Betrieb zunächst aufrechterhalten und parallel dazu werden die Hardware-Eigenschaften und/oder Software-Eigenschaften als Sicherheits-Merkmale (M1,...,Mn) abgefragt.

3. Verfahren nach Anspruch 1, wobei im regulären Betrieb ereignisgesteuert eine erneute Überprüfung aufgrund eines Änderungsereignisses angestoßen wird, der reguläre Betrieb wird zunächst aufrechterhalten und parallel dazu werden die Hardware-Eigenschaften und/oder Software-Eigenschaften als Sicherheits-Merkmale (M1,...,Mn) abgefragt.

4. Verfahren nach einem der Ansprüche 1 bis 3, wobei das Vorhandensein unabhängiger und diversitär ausgelegter Daten-Speicher (A,B), als eine Hardware-Eigenschaft für ein erstes Sicherheitsmerkmal (M1), abgefragt wird, dazu wird in einem ersten Daten-Speicher (A) ein Speicherbereich reserviert und in einem zweiten Daten-Speicher (B) wird auch ein Speicherbereich reserviert, nun werden eine Anzahl (N) von Speicherzugriffen abwechselnd auf die reservierten Speicherbereiche durchgeführt, sind die zeitlichen Zugriffswerte auf beide Speicherbereiche nahezu identisch, wird darauf geschlossen, dass der erste Daten-Speicher (A) und zweite Speicher (B) nicht unabhängig und diversitär ausgestaltet sind, daraus folgt, dass die Prüfung nicht erfolgreich war.

5. Verfahren nach Anspruch 4, wobei ein erster Zeitstempel (t1) erfasst wird und sodann werden gemäß der Anzahl (N) wiederholt eine Leseoperation auf den ersten Daten-Speicher (A) und eine Schreiboperation auf den ersten Daten-Speicher (A) durchgeführt, nach Beendigung des wiederholten Schreibens und Lesens wird ein zweiter Zeitstempel (t2) erfasst, daraufhin werden gemäß der Anzahl (N) wiederholt eine Leseoperation auf den zweiten Daten-Speicher (B) und eine Schreiboperation auf den zweiten Daten-Speicher (B) durchgeführt, nach Beendigung des wiederholten Schreibens und Lesens wird ein dritter Zeitstempel (t3) erfasst, es wird eine erste Gesamtzugriffszeit (TA) aus der Differenz aus dem zweiten Zeitstempel (t2) und dem ersten Zeitstempel (t1) und eine zweite Gesamtzugriffszeit (TB) aus der Differenz aus dem dritten Zeitstempel (t3) und dem zweiten Zeitstempel (t2) berechnet, anschließend wird geprüft, ob eine weitere Differenz aus der ersten Gesamtzugriffszeit (TA) und der zweiten Gesamtzugriffszeit (TB) eine vorgebbare Abweichung übersteigt, ist dass der Fall, ist das erste Sicherheitsmerkmal (M1) erfüllt.

6. Verfahren nach einem der Ansprüche 1 bis 3, wobei das Vorhandensein unabhängiger, aber trotzdem baugleicher Speicher (A,B), als eine Hardware-Eigenschaft für ein zweites Sicherheitsmerkmal (M2) abgefragt wird, dazu wird in einem ersten Daten-Speicher (A) ein Speicherbereich reserviert und in einem zweiten Daten-Speicher (B) wird auch ein Speicherbereich reserviert, nun werden in einer ersten Testphase (TP1) über eine Wiederholungsrate (M) eine Anzahl (N) von Speicherzugriffen auf die reservierten Speicherbereiche des ersten Daten-Speichers (A) durchgeführt,
dann werden in einer zweiten Testphase (TP2) wiederum über eine Wiederholungsrate (M) wiederum eine Anzahl (N) von Speicherzugriffen auf die reservierten Speicherbereiche des ersten Daten-Speichers (A) durchgeführt, aber nun werden zusätzlich mit einer Zusatzanzahl (K) zusätzliche Speicherzugriffe auf die reservierten Speicherbereiche des zweiten Daten-Speichers (B) durchgeführt, sind die zeitlichen Zugriffswerte der Speicherzugriffe auf die reservierten Speicherbereiche des ersten Daten-Speichers (A) in der ersten Testphase (TP1) und in der zweiten Testphase (TP2) annähernd gleich, wird darauf geschlossen, dass der erste Daten-Speicher (A) und der zweite Daten-Speicher (B) unabhängig voneinander sind, weil andererseits ein gemeinsamer Cache (C) der Daten-Speicher (A,B) das Zeitverhalten beeinflusst hätte.

7. Verfahren nach einem der Ansprüche 1 bis 6, wobei das Vorhandensein einer ersten Uhr (U1) und einer zweiten Uhr (U2), welche auf einem ersten Taktgenerator (TG1) bzw. einem zweiten Taktgenerator (TG2) basieren, abgefragt wird, wobei die Taktgeneratoren (TG1,TG2) als eine Hardware-Eigenschaft und damit für ein drittes Sicherheitsmerkmal (M3) voneinander unabhängig arbeiten müssen, hierzu wird jeweils ein erster Uhrzeitstempel (UT11,UT12) der ersten Uhr (U1) und der zweiten Uhr (U2) erfasst, danach wird eines der folgenden Prüfverfahren (P1,P2,P3) durchgeführt:
in einem ersten Prüfverfahren (P1), wird eine Wartezeit (WZ) gestartet, in einem zweiten Prüfverfahren (P2), wird gezielt das Gangverhalten der ersten Uhr (U1) verändert und
in einen dritten Prüfverfahren (P3), wird die IT-Infrastruktur (1) neugestartet,
danach wird jeweils ein zweiter Uhrzeitstempel (UT21,UT22) der ersten Uhr (U1) und der zweiten Uhr (U2) erfasst,
aus den zweiten Uhrzeitstempeln (UT21,UT22) und den ersten Uhrzeitstempeln (UT11,UT12) wird eine erste Uhrzeitdifferenz (UD1) und eine zweite Uhrzeitdifferenz (UD2) gebildet, anschließend wird geprüft, ob eine Differenz aus der ersten Uhrzeitdifferenz (UD1) und der zweiten Uhrzeitdifferenz (UD2) eine vorgebbare Abweichung übersteigt, ist dass der Fall, ist das dritte Sicherheitsmerkmal (M3) erfüllt.

8. Verfahren nach einem der Ansprüche 1 bis 7, wobei in der IT-Infrastruktur (1) für die Steuerungs-Software (Soft-PLC) eine erste Ablaufumgebung (ALUG_A) und eine zweite Ablaufumgebung (ALUG_B) zur Verfügung gestellt werden, wobei als ein viertes Sicherheitsmerkmal (M4) geprüft wird, ob die Ablaufumgebungen (ALUG_A, ALUG_B) voneinander unabhängig realisiert sind, dazu wird ein erster Prozess (PZ1) in der ersten Ablaufumgebung (ALUG_A) und ein zweiter Prozess (PZ2) in der zweiten Ablaufumgebung (ALUG_B) gestartet, wobei in der zweiten Ablaufumgebung (ALUG_B) zusätzliche Rechnungen zum Belasten der zweiten Ablaufumgebung (ALUG_B) ausgeführt werden, es wird dann geprüft, ob die Prozesse (PZ1, PZ2) unterschiedlich lange Ausführungsdauern haben.
